# EUROPEAN PATENT SPECIFICATION

(11) **EP 2 928 304 B1**
(45) Date of publication and mention of the grant of the patent: **19.10.2016**
(21) Application number: 13818434.6
(22) Date of filing: 04.12.2013
(51) Int. Cl.: A21C 9/08, B65G 15/00, B65G 21/06, B65G 21/20, A21C 11/16, A21C 11/22

(54) **PASTA CUT AND TRANSPORT UNIT WITH CONTAINMENT PNEUMATIC SYSTEM**
EINHEIT ZUM SCHNEIDEN UND TRANSPORTIEREN VON TEIGWAREN MIT PNEUMATISCHEM HALTESYSTEM
UNITÉ DE COUPE ET DE TRANSPORT DE PÂTE AYANT UN SYSTÈME PNEUMATIQUE DE CONFINEMENT

(30) Priority: 05.12.2012 IT FI20120270
(43) Date of publication of application: 14.10.2015
(73) Proprietor: Landucci S.r.l., 51100 Pistoia (IT)
(72) Inventor: LANDUCCI, Lando, I-51100 Pistoia (IT)
(74) Representative: Mannucci, Michele
(86) International application number: PCT/IB2013/060632
(87) International publication number: WO 2014/087345

(56) References cited:
- DE-C1- 3 728 624
- GB-A- 576 286
- IT-A1- FI 930 256
- US-A- 4 474 288
- US-A1- 2003 183 493
- US-A1- 2012 285 804

## Description

### Technical Field

The present invention relates to improvements to the machines for producing pasta, in particular short-cut pasta such as penne, rigatoni, pasta for soup or the like. More in particular, the present invention relates to improvements to a pasta cut and transport unit arranged between the die that continuously produces pasta and a drying station.

### State of the Art

Italian patent No. 1265900 describes a pasta cut and transport unit. This cut and transport unit comprises a receiving chamber for receiving the cut pasta, inside which a cutting spindle is housed cooperating with a head of a die from which pasta is continuously fed. Below the receiving chamber for receiving the cut pasta a conveyor is arranged with an endless transport member that receives the cut pasta and feeds it towards a drying and conditioning station.

This cut and transport unit is particularly efficient, but it can be further improved. In particular, the cut and transport unit can be improved as regards the operation thereof with pasta of particularly small dimensions.

### Summary of the Invention

To better guide and contain pasta, above all pasta of small dimensions, a cut and transport unit is provided, wherein a pneumatic system is arranged along an endless conveyor receiving the cut pasta; said pneumatic system generates a side air flow on each side of the conveyor and parallel to the feeding direction, to prevent the pasta to from moving towards the longitudinal edges of the conveyor and falling from it.

According to an aspect, a pasta cut and transport unit is therefore provided, comprising: a bearing structure; a receiving chamber for receiving the cut pasta, inside which a cutting spindle is housed to actuate a cutter; a conveyor, comprising an endless transport member arranged below the receiving chamber, onto which the pasta from the receiving chamber is unloaded. Blowing members are arranged along the longitudinal edges of the endless transport member and in the movement direction thereof, said blowing members being designed to generate side air flows forcing the pasta on the endless transport member and preventing it from exiting laterally.

The air flow generated by the blowing members prevents the pasta on the endless transport member from moving towards the longitudinal edges of the endless transport member.

In some embodiments the receiving chamber is formed in a frame, to which the conveyor is fixed.

In advantageous embodiments the blowing members comprise, on each side of the endless transport member, an air duct having forced air outlets directed so as to generate an air flow towards the center of the endless transport member. To this end the air duct may have air outlets or ports directed towards and against the upper surface of the endless transport member. An air knife is generated, which is nearly parallel to the active surface of the endless transport member, is directed towards the center of this member and pushes the food product towards the center of the transport member thus avoiding the fall thereof.

The cross section of the air duct may be square, rectangular, polygonal, or even differently shaped. The cross section advantageously has at least one rectilinear side, corresponding to a planar face of the duct oriented towards the surface of the continuous transport member and substantially parallel thereto. The air outlets are preferably arranged along this face. They may have a circular section, in the form of holes, or an elongated shape. The section of the air outlets can vary to balance the pressure drop along the longitudinal extension of the air duct.

To contain and guide the pasta towards the endless transport member in a more effective way, in some embodiments along each longitudinal edge of the endless transport member a respective containment wall is arranged, extending along the movement direction of the endless transport member. In advantageous embodiments each containment wall may have a lower longitudinal edge arranged above the upper surface of the endless transport member at such a distance therefrom to form a slit for the passage of forced air. Furthermore, in advantageous embodiments the blowing members are arranged outside of the respective containment walls, i.e. at opposite side with respect to the central area of the endless transport member, so as to generate a forced air flow passing through the slits formed between the lower longitudinal edges of the inclined walls and the endless transport member.

In some embodiments the containment walls may be inclined and converging.

To make the maintenance of the conveyor easier, in some embodiments it may be fixed in a reversible manner to the frame in which the receiving chamber for receiving the pasta is formed. Furthermore, the bearing structure may have auxiliary supports to rest the conveyor when it is not fixed to the frame. In this way it is possible to release the conveyor from the main structure, and rest it temporarily on the auxiliary supports, that can be advantageously designed to allow the conveyor to slide and be removed. The conveyor may be therefore designed like a drawer that can be extracted, thus facilitating the removal operations. In some embodiments the conveyor may be removed from the frame together with at least one part of the blowing members.

In some embodiments the endless transport member is driven around two return rollers, at least one of which is motorized, and the center-to-center distance between said two return rollers can be changeable to loosen the endless transport member and allow the total or partial replacement thereof by moving the return rollers towards each other. This allows removing and replacing the endless transport member without the need for demounting the whole conveyor. By using an actuator to move at least one of the return rollers with respect to the other, it is possible to obtain an automatic adjusting system for regulating the tension of the endless transport member. For instance, a cylinder-piston actuator may be provided, of the hydraulic or preferably pneumatic type, in which the pressure of the operating fluid can be detected and adjusted so as to set and maintain or change the tension of the endless transport member. To this end a proportioning valve, or another equivalent system, may be provided.

The actuator may be designed and controlled to maintain a constant tension of the endless transport member during operation. This allows, for instance, recovering any looseness due to wear and to reduce the number of maintenance interventions necessary to replace the endless transport member.

In some embodiments the endless transport member may be a so-called slat conveyor. Sometimes a slat shall be replaced if damaged or worn. The mechanism for moving the return rollers towards each other facilitates the replacement of the components of the endless transport member without the need for demounting the conveyor or transferring it to a shop or onto a repair table.

These characteristics may be provided also in a device without the pneumatic system for containing the pasta along the edges of the endless transport member. Therefore, according to a different aspect, the invention relates to a pasta cut and transport unit comprising: a bearing structure; a receiving chamber for receiving the cut pasta, inside which a cutting spindle is housed to actuate a cutter; a conveyor, comprising an endless transport member arranged below the receiving chamber, onto which the pasta from the receiving chamber is unloaded; wherein the endless transport member is driven around two return rollers, at least one of which is motorized, and wherein the center-to-center distance between said two return rollers can be changed to loosen the endless transport member and allow the total or partial replacement thereof.

Further advantageous features and embodiments of the invention are described hereunder with reference to non limiting examples of embodiment, and are defined in the appended claims, which form an integral part of the present description.

### Brief description of the drawings

The invention shall be better understood by following the description and accompanying drawing, which shows non-limiting practical embodiments of the invention. More particularly, in the drawing:
figure 1 is a front view of the unit in an embodiment;
figure 2 shows a section according to II-II of figure 1;
figure 2A shows an enlargement of the detail indicated with II_{A} in figure 2;
figure 3 shows a section according to III-III in figure 1;

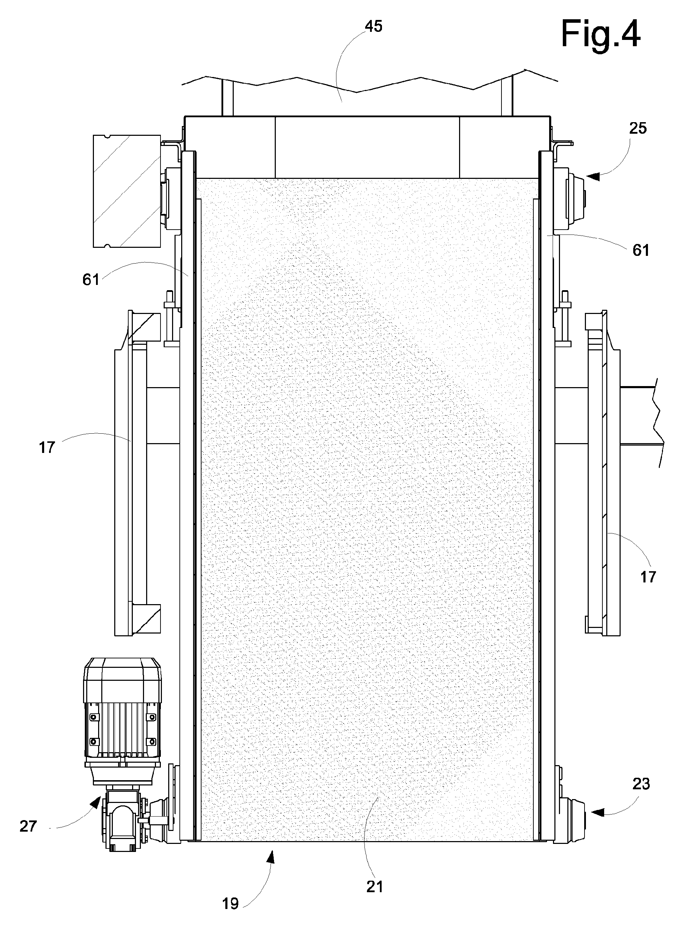

figure 4 shows a section according to IV-IV in figure 1;
figure 5 shows a section according to V-V in figure 3;
figure 5A shows an enlargement of the detail indicated with V_{A} in figure 5;
figure 6 shows an enlargement of the detail indicated with VI in figure 1;
figure 7 is an exploded view of the main components of the conveyor in a possible embodiment; and
figure 8 is a schematic plan view of the support structure supporting the conveyor in a second embodiment.

### Detailed description of embodiments of the invention

The detailed description below of examplary embodiments is made with reference to the attached drawings. The same reference numbers in different drawings identify the equal or similar elements. Furthermore, the drawings are not necessarily to scale. The detailed description below does not limit the invention. The protective scope of the present invention is defined by the attached claims.

In the description, the reference to "an embodiment" or "the embodiment" or "some embodiments" means that a particular feature, structure or element described with reference to an embodiment is comprised in at least one embodiment of the described object. The sentences "in an embodiment" or "in the embodiment" or "in some embodiments" in the description do not therefore necessarily refer to the same embodiment or embodiments. The particular features, structures or elements can be furthermore combined in any adequate way in one or more embodiments.

The cut and transport unit is labeled 1 as a whole. In some embodiments the unit 1 comprises a bearing structure, indicated as a whole with reference number 3. In the illustrated embodiment the bearing structure comprises a substantially horizontal beam 5 cantileverly supported by a slide 7, movable according to the double arrow f7 along a substantially vertical upright 9. The upright may be in turn guided along a fixed beam 13 through guides 15 according to the double arrow f9. Fixed to the beam 3 there are flanks 17 extending at the sides and parallel with respect to a conveyor indicated as a whole with reference number 19 and described in greater detail below. In other embodiments the beam 5 may be mounted directly on the upright 9, and this latter may be telescopic so as to extend from the fixed beam 13 downwards. In this way the area below the fixed beam 13 can be free when the unit 1 is in a working position.

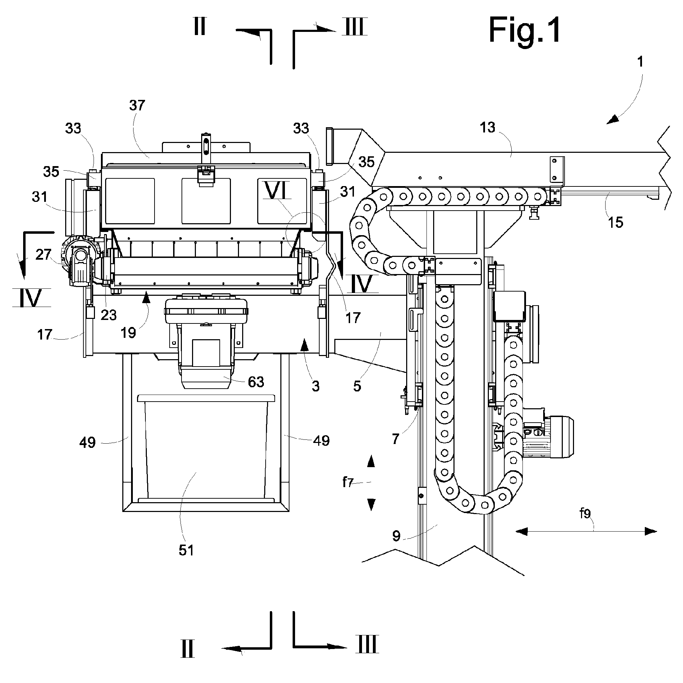

The conveyor 19 comprises (see in particular figures 1, 2, and 7) an endless transport member, for instance a belt or a chain indicated as a whole with number 21. In some embodiments the endless transport member 21 may be a so-called slat conveyor.

The endless transport member 21 can be driven around a pair of rollers 23, 25. In some embodiments the roller 23 is motorized through a gear motor 27, while the roller 25 is idle.

In some embodiments the rollers 23, 25 and the gear motor 27 can be carried by a frame 29, which is in turn carried by the bearing structure 3 in the way described below.

Fixed to the flanks 17 there are blocks 31 carrying stems 33, onto which guide bushes 35 are inserted, integral with a frame 37, in which a receiving chamber 39 is provided for receiving the cut pasta from the die. In some embodiments, associated with the receiving chamber 39 is a spindle 41, onto which a rotating cutting member is mounted to cut the pasta coming from the die above, in a known manner. In the attached drawing the cutting members and the die are not shown, as they are known by those skilled in the art.

In the illustrated embodiment, the spindle 41 is driven into rotation by a gear motor 43, for instance through a belt drive. In other embodiments the spindle 41 may be actuated through a motor coaxial to the same spindle, for instance a brushless motor.

The gear motor 43 can be carried by the frame 37, to which a blower 45 may be fixed, generating an air flow fed inside the receiving chamber for receiving the cut pasta to prevent the fresh cut pasta coming from the die above to stick.

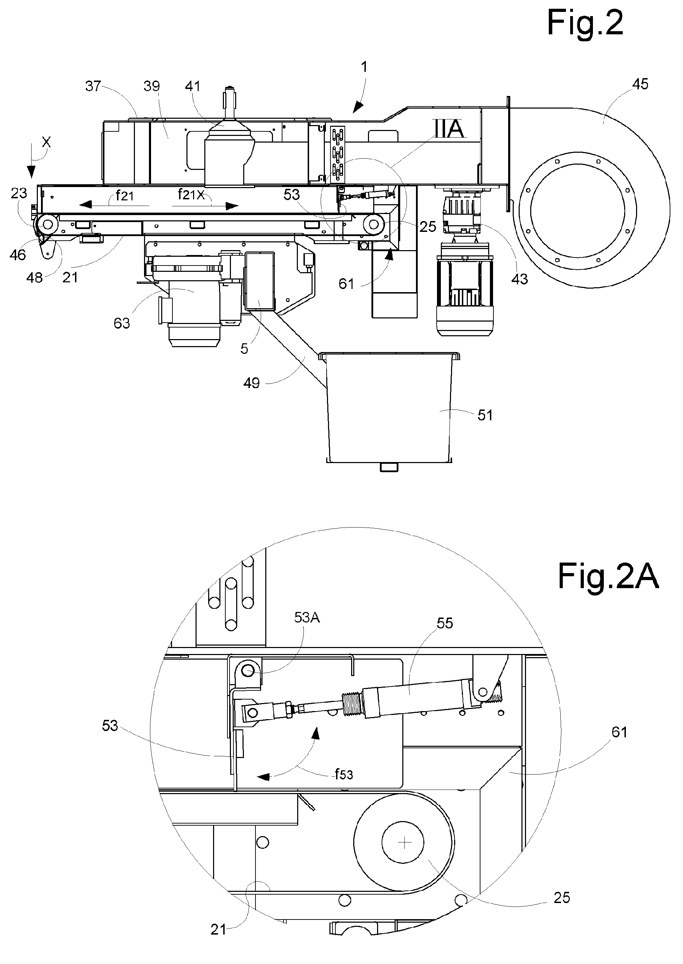

The cut pasta collected in the receiving chamber 39 falls onto the conveyor 19 below and is transferred by the endless transport member 21 towards a drying and conditioning station, not shown. Usually, the endless transport member 21 moves in the direction indicated with the arrow f21 (see in particular figure 2) so as to unload the pasta in the area indicated with X, where it is then transferred to the conditioning and drying station. A doctor blade 45 may be provided to remove any pasta attached to the outer surface of the endless transport member 21.

In the unloading area, for instance below the roller 23, a brush 48 may be provided for cleaning the outer surface of the endless transport member 21 along the lower branch of the same transport member.

In some embodiments, the bearing structure 3 supports, for instance through arms 49, a container 51 arranged below the conveyor 19 at opposite side with respect to the unloading area X. The container 51 is provided to collect the scraps formed, for instance when cutting of the pasta coming from the die starts. In this preliminary step the conveyor 19 can be actuated to move the pasta according to the arrow f21X, i.e. in a direction opposite the direction indicated with the arrow f21 (figure 2). This movement allows unloading the defective pasta and the scraps formed in the transient phase at unit start-up.

In the end area of the endless transport member 21 opposite to the unloading area X towards the conditioning and drying station, an oscillating strap 53 is provided, shown in particular in the enlargement of figure 2A. In some embodiments the strap 53 may be constrained about an oscillation pin 53A and may be controlled to oscillate according to the double arrow f53 for instance through an actuator 55. The actuator 55 may be a cylinder-piston actuator, for instance a pneumatic cylinder-piston. In other embodiments a hydraulic cylinder-piston 55 or a different actuator may be used, for instance an electric motor fixed to a side of the endless transport member 21 and coaxial to the shaft 53A.

During normal operation of the unit 1,the strap 53 is in the lowered position of figure 2A, thus preventing pasta from passing towards the cut-off unloading area, i.e. towards the scraps container 51, facilitating the forward movement of the pasta in the correct feeding direction (arrow f21) towards the area X.

In some embodiments to the conveyor 19 pneumatic means are associated, for preventing or limiting the pasta from moving towards the longitudinal side edges of the endless transport member 21. This is particularly useful when the unit 1 operates with pasta of very small dimensions, for instance pasta for soup or the like. In this case, due to the small dimension thereof, the cut pasta falling onto the conveyor 19 could tend to escape laterally from the transport surface defined by the endless transport member 19.

To limit this effect, blowing members are arranged along both sides of the endless transport member 21 and designed to generate side air flows forcing the pasta on the endless transport member and preventing it from escaping laterally.

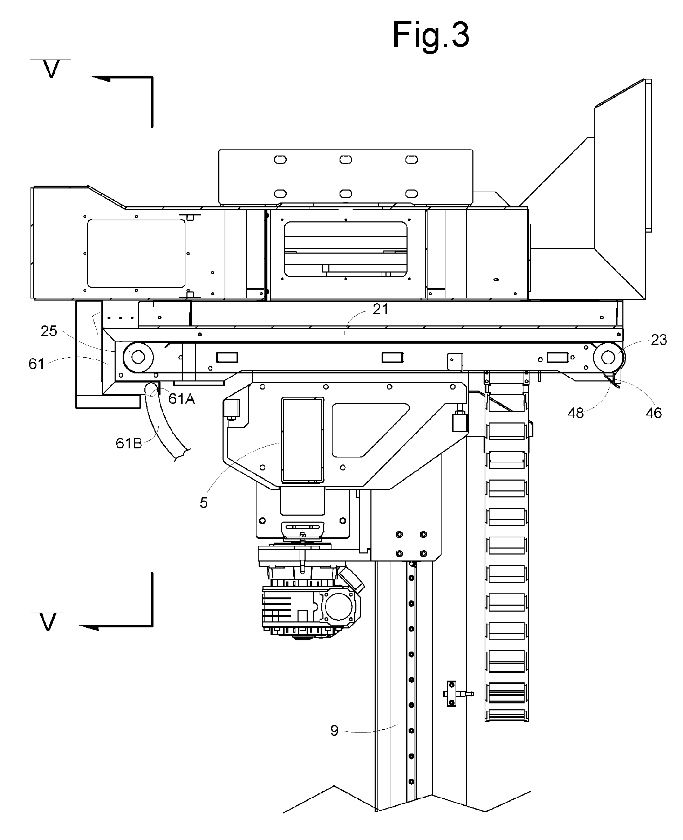

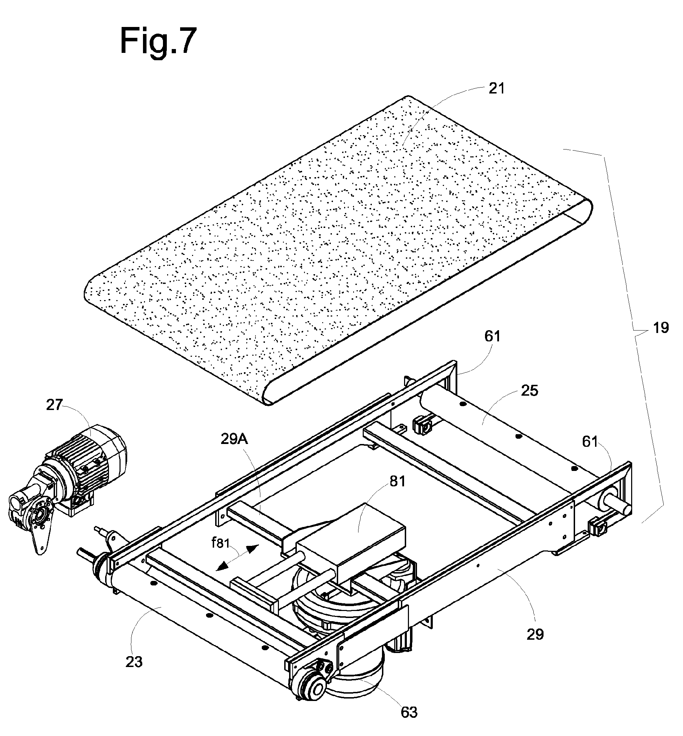

To this end, in the embodiment illustrated in the drawing, on each side of the endless transport member 21 a tubular member is provided defining a forced air duct. Each forced air duct is indicated with 61. The shape of each forced air duct 61 is illustrated in particular in figures 3 and 7.

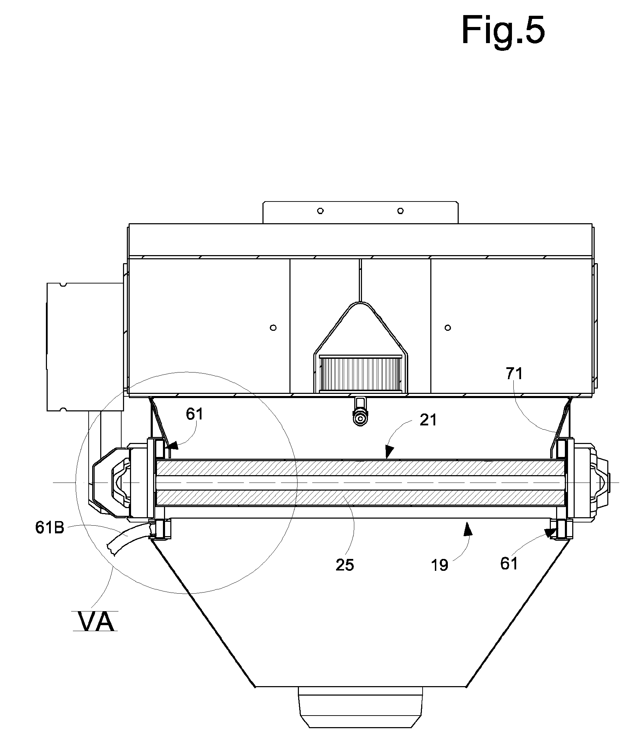

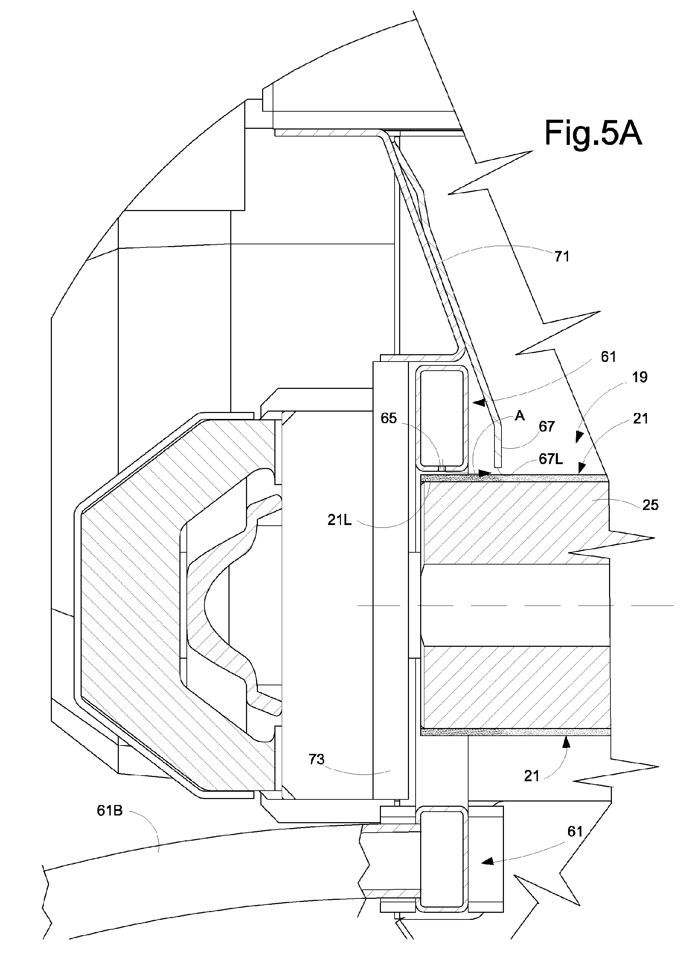

Each tubular member forming the air duct 61 is shaped approximately like a horizontal J, with one end defining an air inlet 61A fed through a flexible duct schematically illustrated with 61B in figures 3 and 5 and inside which forced air is delivered by a blower 63 carried for instance by the horizontal beam 5 of the bearing structure 3.

Practically, two distinct flexible tubes 61B may be provided for each forced air duct 61.

Figure 5A shows in detail a transverse section of one of the forced air ducts 61. In the illustrated embodiments, the air duct 61 has a quadrangular cross section, advantageously of elongated rectangular shape, with the long side directed vertically and the short side directed horizontal and therefore parallel to the plane defined by the upper active branch of the endless transport member 21.

As it is shown in particular in figure 5A, each forced air duct 61 is arranged along the respective longitudinal edge, indicated with 21L, of the endless transport member 21 and is put above it.

Along the longitudinal extension of the forced air duct 61, and more in particular along the lower surface thereof, ports or outlets 65 are provided for the air delivered inside the forced air duct 61. Preferably, between the lower surface of the forced air duct 61 and the upper surface of the active branch of the endless transport member 21 a small space can be left to avoid friction contact and facilitate the passage of the air. To this end, a space of some tenths of millimeter, or for instance in the order from 1 to 5 mm, can be sufficient. In this way the air exiting from the outlets or ports 65 forms an air knife A flowing parallel to the upper surface of the endless transport member 21. This air prevents the pasta, even of small dimensions, from moving towards the longitudinal edges 21 L of the endless transport member 21 and falling there-from.

In advantageous embodiments, along each forced air duct 61 and on the side thereof facing the center of the endless transport member 21 a respective containment wall 67 is arranged, extending from the top downwards and inclined towards the inside of the endless transport member 21 thus forming a guide for the pasta falling onto the endless transport member 21 and moving the pasta away from the edges 21L of this transport member.

As shown in particular in the enlargement of figure 5A, in some embodiments each containment wall 67 has a lower longitudinal edge 67L arranged at short distance, for instance some millimeters, from the upper surface of the active branch of the endless transport member 21. Each forced air duct 61 is arranged on the outside of the respective containment wall 67, i.e. on the side of this wall opposite with respect to the center of the endless transport member 21. The air knife A generated by the ports or outlets 65 formed along the lower wall of each forced air duct 61 passes therefore between the upper surface of the active upper branch of the endless transport member 21 and the longitudinal edge 67L of the respective containment wall 67.

In advantageous embodiments the conveyor 19 is constrained to the frame 37 above by means of brackets 71 fixed along flanks 73 of the frame supporting the conveyor 19 and along the frame 37 above.

In some embodiments, to repair or maintain the conveyor 19, it may be released from the frame 37 above removing screws or other fixing means, not shown, with which the brackets 71 are fixed at the bottom to the frame 37.

In advantageous embodiments, to facilitate disassembly of the conveyor 19, to the blocks 31 fixed to the flanks 17 may be constrained members forming auxiliary temporary supports for the conveyor 19, which may be then removed more easily from the unit 1 once said conveyor 19 has been released from the frame 37.

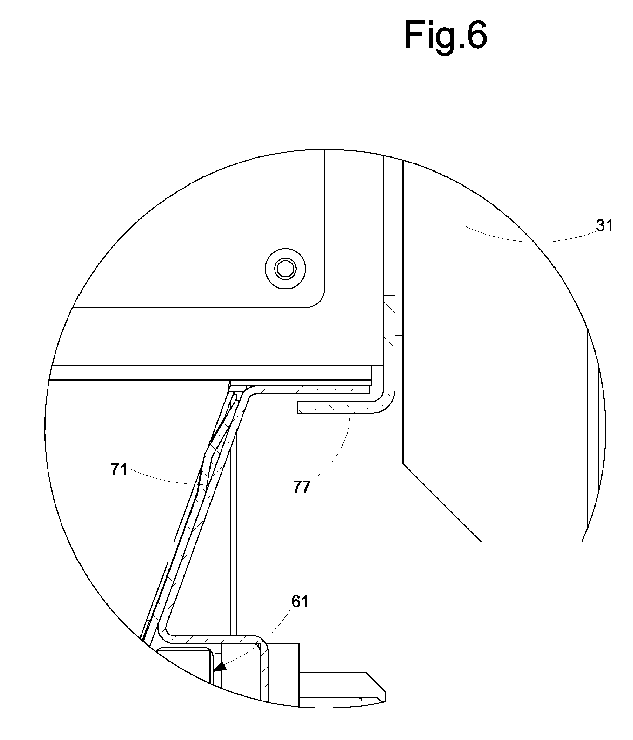

Figure 6 shows a detail of the members forming the auxiliary temporary supports of the conveyor 19. In this case said members comprise angle sections 77. It should be understood that these supports may have also other shapes, for instance T-shaped sections, pins mounted horizontally on the flanks etc. In some cases, support wheels or rollers for the conveyor 19 may be provided to facilitate the removal thereof.

With this arrangement, when the conveyor 19 shall be removed, for instance for repair or maintenance purposes, to replace the endless transport member 21 or the rollers 23, 25, or to repair or replace the gear motor 27, or for any other reason, the conveyor 19 is released from the frame 37 above and put temporarily on the supports formed by the angle sections 77 or on other equivalent supports forming temporary auxiliary supports. Once achieved this position, the conveyor 19 can be removed like a drawer from the unit 1.

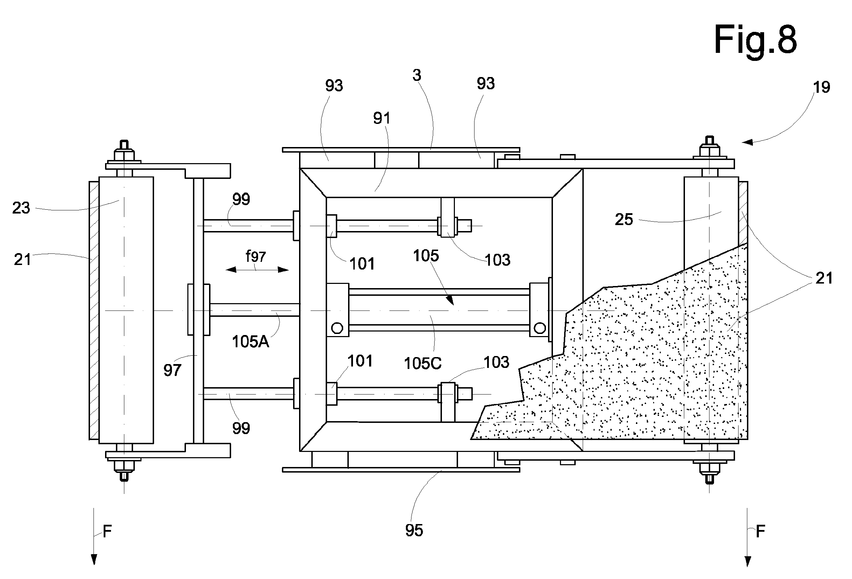

In some embodiments, to facilitate maintenance of the conveyor 19 further solutions may be adopted, described in detail below with reference to figures 7 and 8.

Among the various components 19, the component subjected to particular wear is the endless transport member 21. This latter is therefore the component that must be replaced more often.

In some embodiments, see in particular figure 7, it is possible to adjust the center-to-center distance between the two rollers 23 and 25 around which the endless transport member 21 is driven. To this end an actuator can be provided, for instance a cylinder-piston actuator, preferably of the pneumatic type, indicated with 81 in the scheme of figure 7. The actuator 81 is fixed at one side to the frame supporting the return roller 25 and at the other side to a portion of frame, indicated with 29A, carrying the return roller 23. By acting on the actuator 81 it is therefore possible to modify the center-to-center distance between the rollers 23 and 25 by moving the roller 23 according to the double arrow f81 (figure 7). In other embodiments, this arrangement may be inverted, making fixed the axle of the roller 23 and movable the axle of the roller 25. In further embodiments both the axles of the rollers 23, 25 may be movable and therefore adjustable.

In this way, when the endless transport member 21 shall be replaced, it is possible to move the two rollers 23, 25 towards each other, thus loosening the endless transport member 21 and allowing to remove it laterally, for instance through an aperture provided in one of the two flanks 17.

To avoid the need for disassembly the motor 27, usually it is provided for the endless transport member 21 to be removed from the side opposite to the side on which there is the motor 27.

In some embodiments, the actuator 81 may be also used to adjust and maintain the tension of the endless transport member 21 during the operation of the unit 1. In this way it is possible for instance to balance looseness due to wear of the endless transport member 21. To this end a proportioning valve may be for instance used, that maintains a constant pressure inside the chamber of the cylinder of the cylinder-piston actuator 81. In this way it is not necessary to adjust manually or to early replace the endless transport member 21.

Figure 8 shows a plan view of a modified embodiment of the frame supporting the conveyor 19 with return rollers 23, 25 having a variable center-to-center distance. The endless transport member is schematically labeled with 21 and is partially removed to show the components of the conveyor 19 inside the closed path defined by the endless transport member 21. Reference number 91 indicates a frame, preferably a hyper-static closed frame, constrained at 93 to the bearing structure 3 of the unit 1. On the side opposite to the supports 93 the frame 91 can carry a removable carter 95.

The roller 25 is advantageously supported by bearings mounted to the frame 91 in a fixed position. Vice versa, the return roller 23 is carried by an auxiliary frame 97. The auxiliary frame 97 is constrained to guide bars 99 which slide in guide bushes 101, 103 constrained to the frame 91. The movement of the auxiliary frame 97 with respect to the frame 91 allows to modify the center-to-center distance between the rollers 23,25.

Advantageously, the auxiliary frame 97 is movable according to the double arrow f97 with respect to the fixed frame 91 by means of an actuator 105. The actuator 105 may be advantageously a cylinder-piston actuator, preferably of the pneumatic type. In the illustrated example, the cylinder 105C of the actuator 105 is fixed to the frame 91, while the rod 105A of the actuator 105 is fixed to the auxiliary frame 97.

As described above with reference to the embodiment of figure 7, the actuator 105 both controls and maintains the tension of the endless transport member 21 and moves the rollers 23,25 towards each other, thus reducing the center-to-center distance thereof, to allow the endless transport member 21 to be removed according to the arrows F indicated in figure 8.

In other embodiments the roller 25 may have a movable axle while the roller 23 may remain fixed with respect to the bearing structure 3, together with its motor 27. In other embodiments both the rollers 23, 25 may be carried by auxiliary frames than can be moved, through one or two distinct actuators, with respect to e fixed central frame.

The embodiments described below and illustrated in the drawings have been explained in detail as examples of embodiment of the invention. It will be clearly apparent to those skilled in the art that modifications, variants, additions and omissions are possible, without however departing from the principles, the scope of the concept and the teachings of the present invention as defined in the attached claims. The scope of the invention shall be therefore determined exclusively based upon the widest interpretation of the attached claims, wherein these modifications, variants, additions and omissions are included within this scope. The terms "comprising" "to comprise" and the like do not exclude the presence of further elements or steps in addition to those specifically listed in a claim. The term "a" or "an" before an element, means or feature of a claim does not exclude the presence of a plurality of these elements, means or features. If a claim of a device claims a plurality of "means", some or all these "means" can be actuated by a single component, member or structure. The enunciation of given elements, features or means in distinct depending claims does not exclude the possibility of combining said elements, features or means together. When a method claim lists a sequence of steps, the sequence with which these steps are listed is not binding and can be changed, if the particular sequence is not indicated as binding. Any reference numerals in the appended claims are provided to facilitate reading of the claims with reference to the description and to the drawing, and do not limit the scope of protection represented by the claims.

## Claims

1. A pasta cut and transport unit comprising:
a bearing structure (3);
a receiving chamber (39) for receiving the cut pasta, inside which a cutting spindle (41) is housed to actuate a cutter;
a conveyor, comprising an endless transport member (21) arranged below the receiving chamber (39), onto which the pasta from the receiving chamber is unloaded;
**characterised in that**
blowing members (61) are arranged along the longitudinal edges of the endless transport member (21) and in the movement direction thereof, said blowing members being designed to generate side air flows forcing the pasta on the endless transport member and preventing it from escaping laterally.

2. Unit according to claim 1, wherein said receiving chamber (39) is comprised of a frame (37), to which said conveyor is fixed.

3. Unit according to claim 1 or 2, wherein said blowing members comprise, on each side of the endless transport member (21), an air duct (61) having forced air outlets (65) directed so as to generate an air flow towards the center of the endless transport member (21).

4. Unit according to claim 3, wherein each air duct (61) is arranged above and along a respective longitudinal edge area (21L) of the upper branch of the endless transport member (21) and wherein the forced air outlets (65) are directed towards the upper surface of the endless transport member (21).

5. Unit according to claim 3 or 4, wherein said air duct (61) has at least one substantially planar wall directed towards the endless transport member (21), and wherein said air outlets (65) are arranged along said substantially planar wall.

6. Unit according to one or more of the previous claims, wherein: along each longitudinal edge (21L) of the endless transport member (21) a respective containment wall (67) is arranged, extending along the movement direction of the endless transport member (21); each containment wall (67) has a lower longitudinal edge (67L) arranged above the upper surface of the endless transport member (21) at such a distance therefrom to form a slit for the passage of forced air; and said blowing members are arranged outside of the respective containment wall (67), so as to generate a forced air flow passing through the slits formed between the lower longitudinal edges (67L) of the containment walls (67) and the endless transport member (21).

7. Unit according to claim 6, wherein said containment walls (67) are inclined and converge towards each other.

8. Unit according to at least claim 2, wherein said conveyor is fixed in a reversible manner to said frame (37); wherein said bearing structure (3) has auxiliary supports (77) arranged to support the conveyor when it is not fixed to the frame (37); and wherein the conveyor is preferably removable from the frame (37) together with at least part of the blowing members (61).

9. Unit according to claim 8, wherein said auxiliary supports comprise at least two side brackets (77) where the conveyor rests.

10. Unit according to one or more of claims 2, 8, 9, and 10, wherein said frame (37) is supported in an elastically floating manner in vertical direction on the bearing structure (3).

11. Unit according to one or more of claims 2, 8, 9, and 10, wherein said frame (37) supports a blower (45) generating a dry air flow inside the receiving chamber (39).

12. Unit according to one or more of the previous claims, wherein said conveyor is reversible and movable in opposite directions (f21; f21X) to convey pasta towards a conditioning and drying unit and alternatively towards a waste container (51).

13. Unit according to claim 12, wherein on the exit side of the conveyor towards the waste container (51) a transverse strap (53) is provided with an opening and closing actuator (55), said strap (53) being raised from the endless transport member (21) when the conveyor is actuated to transport pasta towards the waste container (51) and being lowered towards the endless transport member (21) when the conveyor is actuated to move pasta towards the conditioning and drying unit.

14. Unit according to one or more of the previous claims, comprising one of a doctor blade (45) to facilitate the removal of pasta from the endless transport member (21), and a brush (48) for cleaning the endless transport member (21), or both said doctor blade and said brush.

15. Unit according to one or more of the previous claims, wherein said endless transport member (21) is driven around two return rollers (23, 25), at least one of which is motorized, and wherein the center-to-center distance between said two return rollers (23, 25) is changeable to loosen the endless transport member (21) and allow the total or partial replacement thereof; and wherein a first one of said return rollers (23, 25) is preferably mounted with its own axle fixed on a frame (29), and the second of said return rollers (23, 25) is preferably supported movable on the frame (29), to move towards and away from the first return roller

16. Unit according to claim 15, comprising an actuator for controlling the movement of the two return rollers towards and away from each other; wherein said actuator (81) is preferably designed and controlled to maintain a constant tension of the endless transport member (21) in use.

## Patentansprüche

1. Nudel-Schneid- und Transporteinheit mit:
einer Lagerstruktur (3),
einer Aufnahmekammer (39) zur Aufnahme der geschnittenen Nudeln, innerhalb derer eine Schneidspindel (41) aufgenommen ist, um eine Schneidvorrichtung zu betätigen,
einem Förderer mit einem endlosen Transportelement (21), das unterhalb der Aufnahmekammer (39) angeordnet ist, auf dem die Nudeln aus der Aufnahmekammer entladen werden,
**dadurch gekennzeichnet, dass**
Blaselemente (41) entlang der Längskanten des endlosen Transportelementes (41) und in seiner Bewegungsrichtung angeordnet sind, wobei die Blaselemente ausgebildet sind, um seitliche Luftströmungen zu erzeugen, die die Nudeln auf das endlose Transportelement drängen und sie an einem seitlichen Ausweichen hindern.

2. Einheit nach Anspruch 1, wobei die Aufnahmekammer (39) einen Rahmen (37) aufweist, an dem der Förderer befestigt ist.

3. Einheit nach Anspruch 1 oder 2, wobei Blaselemente an jeder Seite des endlosen Transportelementes (21) einen Luftkanal (61) mit Zwangsluftauslässen (64) aufweisen, um so eine Luftströmung zu der Mitte des endlosen Transportelementes (21) zu erzeugen.

4. Einheit nach Anspruch 3, wobei jeder Luftkanal (61) oberhalb und entlang jeweiliger Längskantenbereiche (21L) des oberen Zweigs des endlosen Transportelementes (21) angeordnet ist und wobei die Zwangsluftauslässe (65) zu der oberen Fläche des endlosen Transportelementes (21) gerichtet sind.

5. Einheit nach Anspruch 3 oder 4, wobei der Luftkanal (61) mindestens eine im wesentlichen ebene Wand aufweist, die zu dem endlosen Transportelement (21) gerichtet ist und wobei die Luftauslässe (62) entlang der im wesentlichen ebenen Wand angeordnet sind.

6. Einheit nach einem oder mehreren der vorstehenden Ansprüche, wobei: entlang jeder Längskante (21L) des endlosen Transportelementes (21) eine jeweilige Begrenzungswand (67) angeordnet ist, die sich entlang der Bewegungsrichtung des endlosen Transportelementes (21) erstreckt, wobei jede Begrenzungswand (67) eine untere Längskante (67L) aufweist, die oberhalb der oberen Fläche des endlosen Transportelementes (21) in einem solchen Abstand davon angeordnet ist, um einen Schlitz für den Durchlass von Zwangsluft zu bilden, und die Blaselemente außerhalb der jeweiligen Begrenzungswand (67) angeordnet sind, um einen Zwangsluftstrom zu erzeugen, der durch die Schlitze gelangt, die zwischen den unteren Längskanten (67L) der Begrenzungswände (67) und dem endlosen Transportelement (21) gebildet sind.

7. Einheit nach Anspruch 6, wobei die Begrenzungswände (67) geneigt sind und zueinander konvergieren.

8. Einheit nach mindestens Anspruch 2, wobei der Förderer in einer umkehrbaren Weise an dem Rahmen (37) befestigt ist, wobei die Lagerstruktur (3) Hilfsträger (77) aufweist, die ausgebildet sind, um den Förderer zu tragen, wenn er nicht an dem Rahmen (37) befestigt ist, und wobei der Förderer vorzugsweise von dem Rahmen (37) zumindest mit einem Teil der Blaselemente (61) entfernbar ist.

9. Einheit nach Anspruch 8, wobei die Hilfsträger mindestens zwei Seitenklammern (77) aufweisen, auf denen der Förderer ruht.

10. Einheit nach einem oder mehreren der Ansprüche 2, 8, 9 und 10, wobei der Rahmen (37) in elastisch schwimmender Weise in der Vertikalrichtung auf der Lagerstruktur (3) getragen ist.

11. Einheit nach einem oder mehreren der Ansprüche 2, 8, 9 und 10, wobei der Rahmen (37) ein Gebläse (45) trägt, das einen trockenen Luftstrom innerhalb der Aufnahmekammer (39) erzeugt.

12. Einheit nach einem oder mehreren der vorstehenden Ansprüche, wobei der Förderer umkehrbar und in entgegengesetzte Richtungen (f21, f21X) bewegbar ist, um Nudeln zu einer Konditionierungs- und Trockeneinheit und alternativ zu einem Abfallbehälter (51) zu fördern.

13. Einheit nach Anspruch 12, wobei an der Ausgangsseite des Förderers zu dem Abfallbehälter (51) ein Querband (53) mit einem Öffnungs- und Schließ-Betätigungsglied (55) vorgesehen ist, wobei das Band (53) von dem endlosen Transportelement (21) angehoben wird, wenn der Förderer betätigt wird, um Nudeln zu dem Abfallbehälter (51) zu transportieren, und zu dem endlosen Transportelement (41) abgesenkt wird, wenn der Förderer betätigt wird, um Nudeln zu der Konditionierungs- und Trockeneinheit zu fördern.

14. Einheit nach einem oder mehreren der vorstehenden Ansprüche mit einem von einem Abstreifer (45), um das Entfernen von Nudeln von dem endlosen Transportelement (21) zu erleichtern, und einer Bürste (48) zum Reinigen des endlosen Transportelementes (21) oder sowohl dem Abstreifer als auch der Bürste.

15. Einheit nach einem oder mehreren der vorstehenden Ansprüche, wobei das endlose Transportelement (21) um zwei Umlenkwalzen (23, 25) getrieben wird, von denen mindestens eine motorisiert ist, und wobei der Mitte-zu-Mitte-Abstand zwischen den beiden Umlenkwalzen (23, 25) veränderbar ist, um das endlose Transportelement (41) zu lockern und seinen vollständigen oder teilweisen Austausch zu ermöglichen, und wobei eine erste der Umlenkwalzen (23, 25) vorzugsweise mit ihrer eigenen Achse an einem Rahmen (29) befestigt montiert ist und die zweite der Umlenkwalzen (23, 25) vorzugsweise beweglich an dem Rahmen (29) montiert ist, um sich zu der ersten Umlenkwalze und von ihr weg zu bewegen.

16. Einheit nach Anspruch 15 mit einem Betätigungsglied zum Steuern der Bewegung der beiden Umlenkwalzen aufeinander zu und voneinander weg, wobei das Betätigungsglied (81) vorzugsweise ausgebildet ist und gesteuert wird, um eine konstante Spannung des endlosen Transportelementes (21) im Betrieb aufrecht zu erhalten.

## Revendications

1. Une unité de coupe et de transport de pâte comprenant :
une structure de support (3) ;
une chambre de réception (39) pour recevoir la pâte coupée, à l'intérieure de laquelle une broche coupante (41) est logée pour activer un couteau ;
un dispositif de transport, comprenant un organe de transport sans fin (21) agencé sous la chambre de réception (39), sur lequel la pâte provenant de la chambre de réception est déchargée ;
**caractérisée en ce que**
des organes de soufflage (61) sont agencés le long des bords longitudinaux de l'organe de transport sans fin (21) et dans la direction de déplacement de celui-ci, lesdits organes de soufflage étant conçus pour générer des flux d'air latéraux forçant la pâte à rester sur l'organe de transport sans fin et l'empêchant de s'échapper latéralement.

2. Unité selon la revendication 1, dans laquelle ladite chambre de réception (39) est constituée d'un cadre (37) auquel ledit organe de transport est fixé.

3. Unité selon la revendication 1 ou 2, dans laquelle lesdits organes de soufflage comprennent, de chaque côté de l'organe de transport sans fin (21), un conduit d'air (61) comportant des sorties d'air forcé (65) dirigées de manière à générer un flux d'air vers le centre de l'organe de transport sans fin (21).

4. Unité selon la revendication 3, dans laquelle chaque conduit d'air (61) est agencé au-dessus et le long d'une zone de bord longitudinale respective (21L) de la branche supérieure de l'organe de transport sans fin (21) et dans laquelle les sorties d'air forcé (65) sont dirigées vers la surface supérieure de l'organe de transport sans fin (21).

5. Unité selon la revendication 3 ou 4, dans laquelle ledit conduit d'air (61) comporte au moins une paroi sensiblement plane orientée vers l'organe de transport sans fin (21) et dans laquelle lesdites sorties d'air (65) sont agencées le long de ladite paroi sensiblement plane.

6. Unité selon une ou plusieurs des revendications précédentes, dans laquelle : le long de chaque bord longitudinal (21L) de l'organe de transport sans fin (21), une paroi de confinement respective (67) est agencée, s'étendant le long de la direction de déplacement de l'organe de transport sans fin (21) ; chaque paroi de confinement (67) comportant un bord longitudinal inférieur (67L) agencé au-dessus de la surface supérieure de l'organe de transport sans fin (21) à une distance de celle-ci permettant de former une fente pour le passage de l'air forcé ; et lesdits organes de soufflage sont agencés à l'extérieur de la paroi de confinement respective (67), de manière à générer un flux d'air forcé passant à travers les fentes formées entre les bords longitudinaux inférieurs (67L) des parois de confinement (67) et l'organe de transport sans fin (21).

7. Unité de transport selon la revendication 6, dans laquelle les parois de confinement (67) sont inclinées et convergent l'une vers l'autre.

8. Unité selon la revendication 2 au moins, dans laquelle ledit dispositif de transport est fixé de manière réversible audit cadre (37) ; dans laquelle ladite structure de support (3) comporte des supports (77) agencés pour supporter le dispositif de transport lorsqu'il n'est pas fixé au cadre (37) ; et dans laquelle le dispositif de transport peut de préférence être retiré du cadre (37) avec au moins une partie des organes de soufflage (61).

9. Unité selon la revendication 8, dans laquelle lesdits supports auxiliaires comprennent au moins deux brides latérales (77) sur lesquelles le dispositif de transport repose.

10. Unité selon une ou plusieurs des revendications 2, 8, 9 et 10, dans laquelle ledit cadre (37) est supporté d'une manière flottant élastiquement dans le sens vertical sur la structure de support (3).

11. Unité selon une ou plusieurs des revendications 2, 8, 9 et 10, dans laquelle ledit cadre (37) supporte un souffleur (45) générant un flux d'air sec à l'intérieur de la chambre de réception (39).

12. Unité selon une ou plusieurs des revendications précédentes, dans laquelle ledit dispositif de transport est réversible et déplaçable dans des directions opposées (f21 ; f21X) pour transporter la pâte vers une unité de conditionnement et de séchage et alternativement vers un récipient pour déchets (51).

13. Unité selon la revendication 12, dans laquelle, du côté de la sortie du dispositif de transport vers le récipient pour déchets (51), une bande transversale (53) est prévue avec un organe d'actionnement d'ouverture et de fermeture (55), ladite bande (53) étant élevée depuis l'organe de transport sans fin (21) lorsque le dispositif de transport est actionné pour transporter la pâte vers le récipient pour déchets (51) et abaissée vers l'organe de transport sans fin (21) lorsque le dispositif de transport est actionné pour déplacer la pâte vers l'unité de conditionnement et de séchage.

14. Unité selon une ou plusieurs des revendications précédentes, comprenant soit une racle (45) pour faciliter l'enlèvement de la pâte de l'organe de transport sans fin (21), soit une brosse (48) pour nettoyer l'organe de transport sans fin (21), soit les deux.

15. Unité selon une ou plusieurs des revendications précédentes, dans laquelle ledit organe de transport sans fin (21) est entraîné autour de deux rouleaux de retour (23, 25) dont l'un au moins est motorisé, et dans laquelle la distance de centre à centre entre lesdits deux rouleaux de retour (23, 25) est modifiable pour donner du mou à l'organe de transport sans fin (21) et permettre son remplacement total ou partiel ; et dans laquelle l'un desdits rouleaux de retour (23, 25) est de préférence monté avec son propre axe fixé sur un cadre (29) et l'autre desdits rouleaux de retour (23, 25) est de préférence supporté de manière déplaçable sur le cadre (29), pour se rapprocher ou s'éloigner du premier rouleau de retour.

16. Unité selon la revendication 15, comprenant un organe d'actionnement pour commander le mouvement de rapprochement et d'éloignement des deux rouleaux de retour l'un de l'autre ; dans lequel ledit organe d'actionnement (81) est de préférence conçu et commandé pour maintenir une tension constante de l'organe de transport sans fin (21) lors de l'utilisation.
